# EUROPEAN PATENT APPLICATION

(11) **EP 4 378 324 A1**
(43) Date of publication of application: **05.06.2024**
(21) Application number: 22848744.3
(22) Date of filing: 22.07.2022
(51) Int. Cl.: A23L 27/14, A22C 13/00, A23P 20/10, A23L 27/60, B65D 65/46

(54) **REVERSIBLE EDIBLE FILM, USES AND METHOD OF PRODUCTION**

(30) Priority: 28.07.2021 ES 202130733
(71) Applicant: Viscofan, S.A., 31192 Tajonar (Navarra) (ES)
(72) Inventor: ROJAS GRAU, Maria Alejandra, 31192 TAJONAR (Navarra) (ES); FERON, Bernhard, 31192 TAJONAR (Navarra) (ES); ARRARAS ILUNDAIN, Jose Angel, 31192 TAJONAR (Navarra) (ES)
(74) Representative: Herrero & Asociados, S.L.
(86) International application number: PCT/ES2022/070488
(87) International publication number: WO 2023/007048

(57) **Abstract**

The present invention relates to a reversible edible film with dual functionality comprising 1) a mixture of anionic carboxymethylcellulose (CMC) sodium salt, with a viscosity of less than 50 cp, in a concentration between 0.5 and 10% by weight, and at least another polysaccharide, in a concentration between 0.1 and 5% by weight, and glycerin, in a proportion between 1 and 20% by weight, 2) a sauce or marinating liquid, in a proportion between 20:80 and 80:20 with respect to the mixture, and 3) spices, where the film has two differentiated sides: Side A, whose surface is coated with spices, and Side B, composed of the polysaccharide mixture, glycerin, and sauce or marinating liquid. The present invention also contemplates the method of obtaining the film, as well as its different applications.

## Description

### Field of the invention

The field of invention to which the present invention pertains is that of food, and, in particular, to edible films or sheets. Specifically, it refers to a reversible edible film for transporting spices, sauces or marinating liquid, its applications in food and its obtaining procedure.

### Background of the invention

The use of edible films capable of transporting spices, sauces, or both, and being consumed directly with the food, is a concept already known, as reflected, for example, in patents JPS52108058, CA2085457, ES2349576, US2009035426. Similarly, the use of polysaccharides to incorporate water-soluble seasonings is also known, as reflected, for example, in patent CN109998033A. In this latter patent, an edible gel for the preparation of noodles has been developed, requiring the application of heat for its complete dissolution.

The compositions or edible films described exhibit fluidity when the food to which they are applied undergoes a thermal treatment (cooking) (JP20100046044). The inventors of the present invention, after significant experimental work, have developed edible films that allow the transfer of seasonings, spices, flavorings, etc., to the food without the need for heating. This is achieved thanks to the low viscosity of the developed formulation. Additionally, these films can be used reversibly, presenting dual functionality.

The result is a completely innovative concept, as the new reversible film is capable of adhering spices to the surface of a food, while simultaneously dissolving completely on the product's surface without the use of heat and without the external addition of any liquid. This creates a sauce or marinade around the food. Furthermore, if this film is applied in reverse, a paste capable of carrying decorative spices on the food's surface can be obtained. This dual-applicability film thus becomes a much more versatile and distinctive product. The fact that this product can be used reversibly on both sides depending on the desired functionality represents a new approach in the development of edible films.

### Brief Description of the Figures

Figure 1. Edible film applied to the food in the form of sauce.
Figura 2. Edible film applied to the food in the form of paste.
Figura 3. Edible film applied to the food in the form of marinating liquid.

### Detailed Description of the invention

Based on the needs and deficiencies of the products available in the prior art, the present invention provides a new concept of edible film.

The film of the present invention is based on a mixture of polysaccharides, glycerin, and a sauce or marinating liquid, capable of retaining and transferring spices, as well as turning into a liquid upon contact with the food to which it is applied. This allows the formation of a sauce or marinating liquid around the food or a paste on it.

This mixture allows obtaining a reversible-use film composed of two distinct sides. The upper side of the film is coated with spices (hereinafter referred to as side A), and the lower side is exclusively formed by the mixture of polysaccharides, glycerin, and the sauce or marinating liquid (hereinafter referred to as side B).

More specifically, the edible film carrying sauces, marinades, and spices is formed by a monolayer composed of polysaccharides, with the major component being an anionic sodium salt of carboxymethylcellulose (CMC), soluble in water, and with a viscosity of less than 50 cP. Viscosity measurement is performed in a 2% solution using a Brookfield DV2T viscometer at 25°C with spindle No. 1 and a rotational speed of 60rpm. This polysaccharide has been selected from the group of celluloses primarily due to its very low viscosity, allowing the reversibility of the film and, therefore, greater versatility in its use for various applications sought in the present invention. Additionally, the low viscosity of CMC enables the use of a broader range of concentrations of this compound in the final formulation, allowing for different levels of fluidity in the sauce or marinade in the product.

Thus, in a first aspect of the invention, a reversible edible film with dual functionality is contemplated, comprising:
- A mixture of an anionic carboxymethylcellulose (CMC) sodium salt with a viscosity of less than 50 cP, preferably ranging between 20 and 50 cP, at a concentration between 0.5 and 10% by weight, and at least another polysaccharide, at a concentration between 0.1 and 5% by weight, and glycerin, in a proportion between 1 and 20% by weight,
- A sauce or marinating liquid, in a ratio ranging between 20:80 and 80:20 with respect to the previous mixture, and
- Spices
where the film has two distinct sides
- Side A, whose surface is coated with spices, and
- Side B, composed of the mixture of polysaccharides, glycerin, and sauce or marinating liquid,
where the application of side A of the film onto the surface of food results in the fixation of spices on the surface of said food and the formation of a sauce or marinating liquid around it, and the application of side B onto the surface of said food results in the generation of a paste on the food, containing spices on its surface. This paste can be defined as spreadable, as, due to its thick consistency, it could be spread or smeared onto the food.

The % indicated for each component is the % by weight relative to the total mixture, with water comprising the remaining %. CMC is incorporated into the formulation at a concentration ranging between 0.5 and 10% by weight, preferably between 2 and 8% by weight. This concentration range allows for good film-forming properties, providing excellent homogeneity to the mixture when spread on a substrate, preventing the solution from retracting on the substrate during the drying process. Additionally, the use of concentrations above 2% by weight ensures proper fixation of the added spices on the film's surface during the manufacturing process and, consequently, an excellent transfer capacity to the final product.

In order to enhance the properties of the edible film carrying sauces, marinades, and spices, one or more of the following polysaccharides are preferably added: alginate, pectin, gum arabic, xanthan gum, dextrin, starch, among others, as well as combinations thereof, in a range between 0.1 and 5% by weight. The incorporation of these polysaccharides, as well as their concentration in the film, is directly related to the elasticity, strength, and adhesion properties of the edible films. The inclusion of at least one of these ingredients ensures an improvement in the aforementioned mechanical properties, making the film less brittle than if only CMC were used in the formulation, and also improving the film's ability to separate from the substrate once dry.

Additionally, the elasticity, elongation, and manageability properties of the resulting film are improved by the incorporation of a plasticizing agent such as glycerin. The concentration of this ingredient ranges between 1 and 20% by weight.

The sauce added to the polysaccharide mixture, depending on its final application, can be of any flavor, suitable for both sweet and savory applications, imparting the flavor of the ingredient to the applied product. These sauces can be of plant or animal origin or can be made from fruits, vegetables, jams, etc. Moreover, any type of flavorings, colorings, flavor enhancers, or food concentrates that intensify the sensory properties of the final product can be incorporated into the sauces.

On the other hand, if a marinating liquid is desired, marinating solutions composed of mixtures of ingredients such as seasonings, flavorings, sauces, organic acids, salt, sugar, vinegars, lemon juice, soy sauce, tissue tenderizers, among other ingredients, as well as combinations thereof, will be incorporated into the formulation of the edible film.

Additionally, the solution forming the edible film may contain, in addition to the sauce or marinating liquid, one or more ingredients serving other technological functions for the final product, such as antioxidants, antimicrobials, enzymes, emulsifiers, among others. All these ingredients constitute what is called the solution forming the edible film.

The combined use of the ingredients in this formulation, based on the use of low viscosity CMC, allows for the creation of an edible film resistant to dry handling, regardless of whether it is applied on side A or B of the film. In both cases, the edible film is capable of completely dissolving on the surface of the food, transforming into a sauce, marinating liquid, or paste. It also possesses good adhesion properties for spices to the dry film and their subsequent transport or transfer to the food product where it is applied.

The expected rheological characteristics of the sauce, marinating liquid, or paste obtained after the use of the edible film will depend on the concentration of CMC used and hence its viscosity, the proportion of polysaccharides and sauce or marinating liquid in the formulation of the edible film, as well as the intended end use of the specific edible film.

Surprisingly, another key characteristic found after using low viscosity CMC (less than 50 cP) in this formulation is that, when used in the correct concentration, this polysaccharide allows for a rapid dissolution of the film on the surface of the product when applied on either side. This enables the hydration of the sauce or marinating liquid contained in the film when used to wrap food, as well as the obtaining of a paste when the film is applied on the surface of foods.

The use of this low viscosity CMC allows for the dissolution of the sauce contained in the film through hydration with the moisture provided by the food itself, in cases where the food is not immediately cooked after the application of the film. Furthermore, this sauce can become a completely fluid liquid when the coated product is subjected to heating or cooking. Any expert in the field would know that the viscosity of CMC decreases as the temperature increases, which is desirable, for example, for the formation of a liquid sauce around the food after its heating.

However, when the goal is to obtain a liquid, such as a marinade covering the entire food or a paste on the surface of a product, without the need for heating, it is important to use ingredients that allow for this fluid characteristic in the final product, even under refrigeration temperatures. Therefore, the selected low viscosity CMC in this invention allows, on the one hand, the obtaining of fluid sauces when heated, but also marinades or pastes when applied cold. If the viscosity of the CMC were higher, these latter applications would be unfeasible using the same film, as it would generate a very viscous and less fluid paste.

In another key aspect of the invention, the process for obtaining the edible film is considered.

This process includes the following phases:
a) Preparation of an aqueous solution comprising CMC, at a concentration ranging between 0.5 and 10% by weight, at least another functional polysaccharide, at a concentration between 0.1 and 5% by weight, and glycerin, at a concentration between 1 and 20% by weight,
b) Mixing the aqueous solution obtained in a) with the desired sauce or marinating liquid to be transferred to the final product, in a ratio ranging between 20:80 and 80:20,
c) Degassing the mixture obtained in b),
d) Deposition of the degassed mixture obtained in c) onto a substrate,
e) Application of a layer of spices on the surface of the wet mixture on the substrate,
f) Removal of the water content in the mixture through a drying process at a temperature between 50 and 150°C for a period of time between 1 and 10 minutes, and
g) Obtaining the edible film with a thickness greater than 150 microns.

The % indicated for each component is the % by weight relative to the total of the aqueous solution, with water comprising the remaining %.

As mentioned, the aqueous solution (composed of polysaccharides and glycerin) is mixed with the desired sauce or marinating liquid to be transferred to the final product, in a ratio ranging between 20:80 and 80:20, depending on the type of sauce or marinating liquid to be incorporated into the formulation, as well as the desired final product.

Once the mixture is obtained, it is degassed by subjecting the solution to a vacuum pressure greater than 0.6 bars, with continuous agitation, for at least 1 hour or until air bubbles have completely disappeared. Subsequently, the degassed solution is continuously and uniformly spread on a substrate that serves as support for the film (plastic, silicone-coated paper, Teflon, etc.). This solution is deposited on the substrate using known methods, such as a blade system or the slot-die system. The thickness of this solution layer is adjusted so that films with a sufficiently high micrometer can be obtained, preferably at least 300 microns, which can later be converted into sauces or marinades.

Spices are then added, cascading onto the surface of the edible film containing the sauce or marinade while it is still wet. The quantity of each spice to be added depends on the final application of the edible film. Various types of spices in whole or chopped grains, leaves, stems, powder, etc., can be added, such as pepper, oregano, parsley, curry, pastrami, basil, sweet or spicy paprika, fines herbs, Herbes de Provence, thyme, rosemary, chipotle, garlic, dehydrated vegetables, among others, including "sweet" spices such as cinnamon, cardamom, anise, nutmeg, even small pieces of flowers, or dehydrated fruits, etc., depending on their final application.

After the spice deposition process, the film is finally subjected to a drying process at a temperature between 50 and 150°C for a period of time between 1 and 10 minutes. The drying process can be carried out by different methods known in the art, preferably by convection and/or infrared. Once the film is completely dry, it is automatically separated from the substrate and converted into rolls consisting solely of the edible film carrying the sauce or marinade and spices. This can be further transformed into different shapes and sizes depending on the food where it is to be applied. It is also possible to obtain rolls consisting of the edible film still supported by the plastic substrate or silicone-coated paper used for its deposition, which can likewise be subsequently transformed into different shapes or sizes.

The thickness of the resulting film is between 150 and 1000 microns, depending on the amount of sauce or marinade to be transferred, as well as the type and quantity of spices used in its preparation. It is preferable to use thicker films when their final application is carried out on side B of the film, i.e., with the aim of obtaining a paste on food products stored in refrigeration. To achieve different micrometers, various parameters can be adjusted, such as the opening of the dosing system, the speed of the production line, the viscosity of the solution, and, for example, the solute content of the mixture.

The edible film obtained by this process can, therefore, be applied on either of its two sides (A or B) in direct contact with the food, depending on the desired functionality.

It will be applied on side A when the goal is, first, to fix the spices on the surface of the food where the edible film is deposited and, subsequently, to create a sauce or marinade on it.

If the edible film carries a sauce, it will turn into a liquid form when applied to food that undergoes thermal treatment or heating before consumption. This includes various types of meats such as beef, poultry, pork, lamb, fish, seafood, among others, or any other food that can be consumed along with a sauce, including pre-cooked foods.

If the resulting edible film carries a dry marinade, it will become liquid after the first 24 hours in contact with the food, due to its own moisture, creating a marinade around the product during refrigerated storage. The food can then be subsequently cooked or not. This application is particularly useful for various types of meats, including beef, poultry, pork, lamb, fish, seafood, among others, where the aim is to enhance the sensory properties of the final product during refrigerated storage.

In both cases, the edible film is applied by wrapping it around the entire surface of the food through direct contact with the side of the film containing the spices (Side A). This way, the spices adhere to the product where the film is applied, while the components of the film transform into a sauce or marinade around the food.

On the other hand, the edible film will be applied on Side B if the goal is to transport spices on the surface of the product. These spices will be deposited on the spreadable layer created by the edible film once hydrated. Applying on Side B is especially recommended if the food where the edible film is deposited is not subjected to any thermal treatment after application. The film dissolves on the surface of the product due to the food's inherent moisture, forming a spreadable paste on its surface. This is particularly useful for applications in cheeses, yogurts, spreadable dairy products, baked goods, including pies, pastries, spreadable meat products like pates, semi-cooked products, among others. In this case, the side of the film containing the sauce (Side B) is applied directly to the surface of the food, keeping the spices on the top, and it can also serve a decorative purpose in this case.

Based on the above, another key aspect of the invention involves a method for applying the edible film of the invention, carrying sauces and spices, to foods subjected to thermal treatment before consumption, comprising the following steps:
- Application of the film by direct contact with the side of the film containing spices (Side A), wrapping it around the food to fix the spices on its surface.
- Packaging the food wrapped in the film.
- Cooking the packaged food wrapped in the film.

This results in a food item covered with spices on its surface and surrounded by a fluid liquid sauce.

Before cooking, the food wrapped in the film must be packaged, preferably vacuum-sealed, so that the sauce can form around the product with the liquid from the food. The packaging must be suitable for cooking (bag, tray, etc.) since, during cooking, the food will be contained in this package.

Optionally, before cooking, the food wrapped in the film can be stored in refrigeration.

The film applied in this way can be used for various types of meats, including beef, poultry, pork, lamb, fish, seafood, among others, or any other food that can be consumed along with a sauce after cooking, including pre-cooked foods.

Therefore, if the goal is to generate a fluid liquid sauce around the product, subsequent heating or cooking of the food where the film is applied will be necessary, resulting in a less liquid sauce in cases where heat is not applied.

In another key aspect of the invention, the method for applying the edible film, carrying spices and marinating liquid, to foods not subjected to thermal treatment before consumption, comprises:
- Application of the edible film, by direct contact with the side containing spices (Side A), wrapping it around the food to fix the spices on its surface.
- Packaging the food wrapped in the film.
- Refrigerating the packaged food wrapped in the film.
- Obtaining a food item coated with the marinating liquid.

If the edible film containing a dry marinating liquid is applied, it will completely dissolve during the product's refrigerated storage, remaining liquid during the product's marinating time. No additional heat is needed for fluidization. Storage takes place for at least 24 hours, with the film in direct contact with the packaged food, to ensure complete dissolution at a refrigeration temperature between 4 and 6°C.

The film applied in this manner can be used on various types of meats, including beef, poultry, pork, lamb, fish, seafood, among others, or any other food susceptible to marination.

It is important to note that, in both applications, the food will be completely wrapped with the film to ensure the formation of the sauce or marinade over the entire product. This increases the contact surface with the food, and consequently, the level of film dissolution around the product.

Finally, if the film is applied on Side B, a paste will be formed by hydrating the film on the food surface.

Thus, in another key aspect of the invention, a method for applying the edible film of the invention, carrying spices and sauces, to foods not subjected to thermal treatment before consumption is considered, comprising:
- Application of the edible film by direct contact with the side containing the sauce (Side B) with the food surface.
- Obtaining a food item with a layer of paste or topping containing spices on its surface.

In this case, packaging the food after applying the film is an optional step.

This spreadable paste can also serve a decorative function. This application is particularly useful for cheeses, yogurts, spreadable dairy products, baked goods, including cakes and pastries, spreadable meat products like pates, semi-cooked products, among others.

Applying the edible film, carrying spices and sauces, on the reverse side (Side A), meaning with the spice side in direct contact with the food, might also be possible for products that do not require subsequent cooking. In this case, the film will preferably cover the top of the product, resulting in a smaller contact surface and a lower level of fluidization over the food. This will create a consistent or thick layer on the product during refrigerated storage.

In any of these three cases, the combined use of polysaccharides containing low-viscosity, water-soluble CMC allows the preparation of edible films with versatile applications, capable of dissolving on the surface of a food item and opening up the possibility of diversifying their use across a wide range of foods.

Moreover, the use of edible films containing sauces or marinades offers several advantages. On the one hand, it allows minimizing the preparation and application times of these ingredients in a standard production process, expanding the possibility of introducing different flavors into the product without the need for any intermediate cleaning process, saving time and effort.

On the other hand, the use of edible films containing dry marinating liquids facilitates obtaining marination of the food from the moment of packaging and throughout its storage, eliminating a step in the current production process of marinated products.

In addition, being a film that can be transformed into various shapes and sizes according to its application, it also allows using at least two flavors of sauces and/or spices in the same product composed of more than one type of food, as in precooked dishes.

The edible films described in this invention have low water activity, less than 0.5, allowing their safe use and storage for an extended period, minimizing the microbiological risks associated with current methodologies for preparing and applying these products in the food industry.

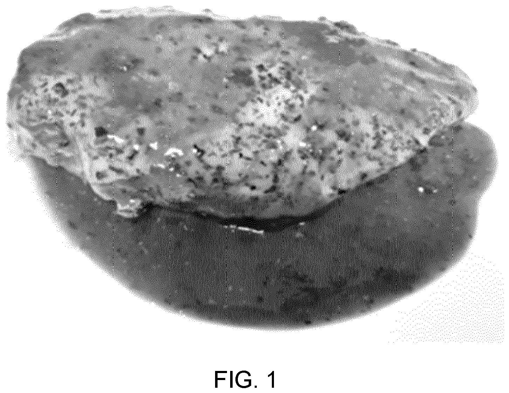

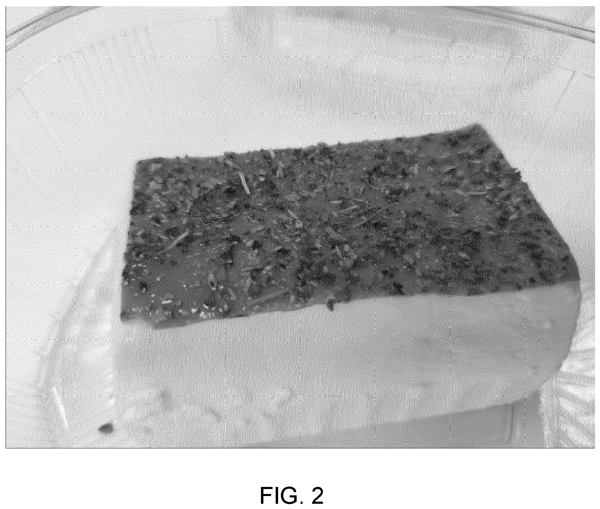

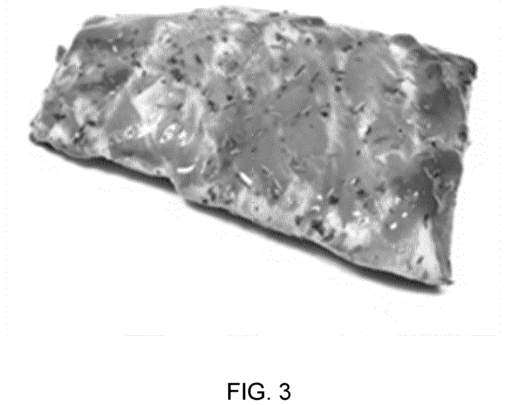

In another aspect of the invention, different food products obtained after the application of the film are considered. Thus, the food product comprising the edible film is contemplated, where the film carries spices and sauces or spices and marinating liquid. The film in the food product can be in the form of sauce around the food (Figure 1), in the form of liquid marinade covering the food (Figure 2), or in the form of a paste on its surface (Figure 3).

Below, three examples of the preparation and application of edible films, both on side A and side B, are provided, which in no case limit the scope of the invention.

### EXAMPLES:

Below are the ingredients used to carry out the following tests:
- Carboxymethylcellulose:Sodium carboximethylcelulose, Blanose^{™} 7LF, Ashland Specialties France SARL, Alizay, France.
- Alginate: Sodium alginate, Viscarin^{®} GP21, Dupont Nutrition Ireland, Cork, Ireland.
- Pectin: Pectin with low level of methoxylation, Unipectine^{™} OF-100, Cargill France SAS, Redon, France.
- Corn starch: Pregelatinized corn starch, Quemina 21.214, Agrana Starke GmbH, Aschach, Austria.
- Glycerol: Glycerol, Wilfarin USP-997, Wilmar Europe Trading B.V., Rotterdam, Netherland.

### Example 1. Preparation of Mushroom Sauce Films with Parsley and their Application to Chicken Breasts.

Firstly, the film-forming solution was prepared by creating an aqueous solution composed of 6% w/w carboxymethyl cellulose (CMC), 3% w/w alginate, and 2% w/w glycerol. This solution was achieved by dispersing the components in water and subsequent degassing. Once the solution was obtained, it was mixed with a commercial mushroom sauce in a 70:30 ratio.

After the mixture was obtained, it was spread onto silicone paper using a modulable blade system to define the initial thickness of the still-wet film. The thickness of the expected dry film was calculated accordingly. Once the solution was deposited on the paper (400 µm), parsley was cascaded onto its still-wet surface, incorporating 45 g/m2 of spices. Subsequently, the wet film containing the spices was subjected to a continuous drying process, consisting of infrared and hot air. It required 145° C and 5 minutes to obtain a completely dry film, resulting in a final film thickness of 200 µm. Once dry, the film was separated from the paper and applied to chicken breasts. The side of the film containing the parsley layer (side A) was placed directly in contact with the surface of the chicken breast, covering it entirely and subjecting the product to vacuum packaging. The chicken breast was then cooked at a low temperature (70°C) for 3 hours, following the sous-vide cooking technique. After this period, the solid film transformed into a liquid, forming a sauce around the chicken breast, with the parsley leaves fully adhered to the surface of the final product.

### Example 2. Preparation of Barbecue Marinade Films with Black Pepper and Application to Pork Tenderloin.

For this, an aqueous solution was prepared, composed of 6.5% w/w CMC, 1% w/w alginate, 0.5% w/w pectin, and 1% w/w glycerol. This solution was obtained by dispersing these ingredients in water and subsequently degassing. Once the solution was obtained, it was mixed with barbecue marinade liquid in a 45:55 ratio.

Next, the mixture was spread onto silicone paper using a modulable blade system. Once the solution was deposited on the paper (500 µm), black pepper was cascaded onto its still-wet surface, incorporating 20 g/m2 of spice. Subsequently, the wet film containing the spices was subjected to a continuous drying process consisting of infrared and hot air. It required 140°C and 6 minutes to obtain a completely dry film, resulting in a final film thickness of 250 µm. Once dry, the film was separated from the paper and applied to pork tenderloins. The side of the film containing the pepper layer on its surface (side A) was placed directly in contact with the meat's surface, covering it entirely. Subsequently, the coated pork tenderloin was vacuum-sealed and stored in refrigeration for 15 days. After the first 24 hours of storage, the solid film dissolved completely, forming a marinade liquid around the product, and the pepper was observed to be fixed on the product's surface. After this storage period, the edible film performed its marinade function, making the pork tenderloin ready for consumption, whether raw or cooked.

### Example 3. Preparation of Tomato Sauce Films with Basil and Application to Feta Cheese.

To begin with, the film-forming solution was prepared by creating an aqueous solution composed of 5% w/w carboxymethyl cellulose (CMC), 3% w/w alginates, and 2% w/w glycerol. The solution was obtained by dispersing these components in water and subsequently degassing. Once the solution was obtained, it was mixed with a commercial tomato sauce in a 60:40 ratio.

Once the mixture was obtained, it was spread onto silicone paper using a modulable blade system, starting with an initial thickness of 700 µm for the still-wet film. Once deposited on the paper, basil leaves were cascaded onto its surface, incorporating 55 g/m2 of spice in this case. Subsequently, the wet film containing the basil was subjected to a continuous drying process consisting of hot air. It required 125°C and 8 minutes to obtain a completely dry film, with a final thickness of 400 µm. Once dry, the film was separated from the paper and applied to the cheese on its side B, meaning, on the side with the tomato sauce, leaving the basil leaves exposed on the surface of the cheese in a decorative manner. Once the edible film was placed on the product's surface, the cheese was vacuum-sealed and stored in refrigeration. After a 24-hour period, the dry film absorbed the moisture from the cheese, transforming into a tomato paste with integrated basil on the surface of the cheese, making it ready for consumption.

## Claims

1. Reversible edible film with dual functionality comprising:
- A mixture of an anionic carboxymethylcellulose (CMC) sodium salt with a viscosity of less than 50 cp, in a concentration between 0.5 and 10% by weight, and at least another polysaccharide, in a concentration between 0.1 and 5% by weight, and glycerin, in a proportion between 1 and 20% by weight,
- A sauce or a marinating liquid, in a proportion between 20:80 and 80:20 with respect to the mixture, and
- Spices,
wherein the film has two differentiated sides:
- Side A, whose surface is coated with spices, and
- Side B, composed of the polysaccharide mixture, glycerin, and sauce or marinating liquid.

2. Film according to claim 1, wherein the viscosity of the CMC is between 20 and 50 cp.

3. Film, according to claim 1 or 2, wherein the concentration of CMC is between 2 and 8% by weight.

4. Film, according to any of claims 1 to 3, wherein the at least another polysaccharide is selected from alginate, pectin, gum arabic, xanthan gum, dextrin, starch, and their combinations.

5. Procedure for obtaining the reversible edible film of claim 1, **characterized in that** it comprises the following steps:
a) Preparation of an aqueous solution comprising CMC, in a concentration between 0.5 and 10% by weight, at least another polysaccharide, in a concentration between 0.1 and 5% by weight, and glycerin, in a concentration between 1 and 20% by weight,
b) Mixing the aqueous solution obtained in a) with the sauce or marinating liquid, in a proportion between 20:80 and 80:20,
c) Degassing the mixture obtained in b),
d) Deposition of the degassed mixture obtained in c) onto a substrate,
e) Application of a layer of spices on the surface of the mixture on the substrate while it is still wet,
f) Removal of the water contained in the mixture through a drying process, at a temperature between 50 and 150°C, for a period of time between 1 and 10 minutes, and
g) Obtaining the edible film with a thickness greater than 150 microns.

6. Procedure according to claim 5, wherein step f) is carried out by convection and/or infrared.

7. Use of the reversible edible film of claim 1 for fixing spices on the surface of food and forming a sauce or marinade around it.

8. Use of the reversible edible film of claim 1 for generating a paste on food containing spices on its surface.

9. Procedure for the application of the reversible edible film of claim 1, carrying sauces and spices, to foods subjected to heat treatment before consumption, **characterized by** the following stages:
- Application of the film by direct contact with the side containing the spices (Side A) enveloping the food,
- Packaging of the food wrapped in the film,
- Cooking the packaged food wrapped in the film, and
- Obtaining the food covered with spices on its surface and surrounded by a liquid and fluid sauce.

10. Procedure according to claim 9, wherein, optionally, before cooking, a refrigeration stage of the packaged food wrapped in the film is carried out.

11. Procedure for the application of the reversible edible film of claim 1, carrying spices and marinating liquid, to foods not subjected to heat treatment before consumption, **characterized by** the following stages:
- Application of the edible film, by direct contact with the side containing the spices (Side A), enveloping the food,
- Packaging of the food wrapped in the film,
- Refrigeration of the packaged food wrapped in the film, and
- Obtaining a food coated with the marinating liquid.

12. Procedure for the application of the reversible edible film of claim 1, carrying spices and sauces, to foods not subjected to heat treatment before consumption, **characterized by** the following stages:
- Application of the edible film by direct contact with the side of the film containing the sauce (Side B) with the surface of the food, and
- Obtaining food with a layer of paste containing spices on its surface.

13. Food product comprising the edible film of claim 1.

14. Food product according to claim 13, wherein the film carries spices and sauces.

15. Food product according to claim 13, wherein the film carries spices and marinating liquid.
